# EUROPÄISCHE PATENTANMELDUNG

(11) **EP 0 564 922 A1**
(43) Veröffentlichungstag der Anmeldung: **13.10.1993**
(21) Anmeldenummer: 93104998.5
(22) Anmeldetag: 26.03.1993
(51) Int. Cl.: A01F 15/08, A01D 90/04

(54) **Schneidwerk**

(30) Priorität: 06.04.1992 DE 4211518
(71) Anmelder: DEERE & COMPANY, Moline, Illinois 61265 (US)
(72) Erfinder: Jüptner, Detlef, W-6796 Schönenberg-Kübelberg (DE)
(74) Vertreter: Feldmann, Bernhard

(57) **Zusammenfassung**

2.1. Schneidwerke an Rundballenpressen oder Ladewagen sind mit schwenk- und entnehmbaren Messern (34) versehen, die in eine Betriebs- oder eine Außerbetriebsstellung gebracht und vollkommen entnommen werden können. Die Handhabung der Messer (34) ist kraftaufwendig und umständlich, insbesondere, wenn sie in klebrigem Erntegut festhaften.

2.2. Es wird ein Schneidwerk (18) vorgeschlagen, bei dem die Messer (34) von Haltearmen (36) gegen den Bewegungswiderstand festhaftenden Guts sicher bewegt werden, und bei dem die Haltearme (36) in eine Stellung bringbar sind, in der sie die Messer (34) zur Demontage freigeben.

2.3. Schneidwerke werden an Landmaschinen (10) verwendet.

## Beschreibung

Die Erfindung betrifft ein Schneidwerk für eine Landmaschine, insbesondere für eine Rundballenpresse, mit wenigstens einem schwenkbaren Messer und wenigstens einem Haltearm, wobei der Haltearm in eine Ausnehmung in dem Messer einsetzbar ist.

Die DE-OS-38 16 204 und die EP-A1-0 077 474 zeigen an einer Rundballenpresse bzw. an einem Ladewagen jeweils ein Schneidwerk mit zwei Satz Messern, die sich in einer Betriebsstellung in einen Schneidkanal erstrecken und in einer Außerbetriebsstellung aus diesem entfernt sind. Während die Messer des stromaufwärts liegenden Satzes mittels Haltearmen unter Federkraft in einem Rahmen gehalten sind und mit diesem per Hand verschwenkt werden können, sind die Messer des zweiten Satzes einzeln zwischen einem Bolzen und über Steuerscheiben verstellbaren Haltearmen gehalten. Die Messer sind nacheinander oder gemeinsam in eine Stellung bringbar, in der sie aufgrund ihres Eigengewichts um den Bolzen aus dem Schneidkanal schwenken können.

Dieses Schneidwerk ist mit mehreren Nachteilen behaftet. So ist es unter den gegebenen Einbauverhältnissen für eine Bedienungsperson nur schwer möglich, die Messer des ersten Satzes zu entnehmen, weil hierzu gleichzeitig die Haltearme entgegen der hohen Federkraft aus den Ausnehmungen gezogen werden müssen. Des weiteren können bei Verstopfungen und Verklebungen der Messer aufgrund von feuchtem, klebrigem Erntegut mit hohem Gärsaftanteil die Messer in dem Schneidkanal festhaften, während der Rahmen in die Außerbetriebsstellung gezogen wird. Die Messer des zweiten Satzes unterliegen der Gefahr des Festhaftens in dem Schneidkanal umso mehr, als sie nur aufgrund des Eigengewichts aus diesem schwenken sollen.

Die der Erfindung zugrunde liegende Aufgabe wird darin gesehen, die Handhabung der Messer, d. h. deren Verstellung und/oder Entnahme zu vereinfachen.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise ist zum einen sichergestellt, daß der Haltearm - bzw. bei mehreren Messern die Haltearme - in der Ausnehmung verharren, während das bzw. die Messer aus der Betriebsstellung bewegt werden. Der Eingriff kann durch eine Erhöhung des Anlagedrucks des Haltearms in der Ausnehmung oder durch eine mechanische Arretierung des Haltearms bewirkt werden, die verhindert, daß dieser aus der Ausnehmung austritt, wenn das Messer entgegen der Haftkraft aus dem Schneid- bzw. Zufuhrkanal gezogen wird. Zum anderen wird in der anderen Stellung der Haltearm aus der Ausnehmung entfernt und somit von dem Messer getrennt, so daß das Messer vollkommen frei liegt und von seinem Träger oder dergleichen entnommen werden kann. Die form- und/oder reibschlüssige Anlage des Haltearms in der Ausnehmung bis zum Erreichen der zweiten Stellung stellt auch sicher, daß das Messer nicht bereits vor Erreichen der Außerbetriebsstellung aus seiner Halterung entfallen kann.

Eine Vereinfachung der Entnahme und Verstellung mehrerer Messer tritt ein, wenn diese gemeinsam auf oder in einem Rahmen gehalten und mit diesem verstellbar sind.

Während die Betätigungsvorrichtung auch direkt an dem Rahmen und z. B. über eine Langlochverbindung an dem oder den Haltearmen angreifen könnte, ist es zur Steuerung der Bewegungen einfacher, sich eines Umlenkglieds zu bedienen, das abhängig von der Stellung des Rahmens oder aber nach einer Entriegelung von dem Rahmen betätigbar ist.

Während die Betätigungsvorrichtung auch ausschließlich oder für einen Notfall mechanisch betätigbar ausgebildet sein kann, ist es doch kräftesparender und bequemer, wenn die Betätigungsvorrichtung als ein Druckmittel- oder Elektromotor ausgebildet ist, der über einen bereits vorhandenen Energiekreis gespeist werden kann.

Eine mögliche Art, den Eingriff des Haltearms in der Ausnehmung auch gegen die aufgrund der Haftung der Messer in dem Schneidkanal vorhandenen Kräfte zuverlässig zu gestalten, besteht in der angegebenen Ausbildung der Ausnehmung, weil dann der Haltearm bei der Bewegung in der einen Richtung nicht aus der Ausnehmung entweichen kann. Hingegen kann er auf herkömmliche Weise in der anderen Richtung austreten, um die Messer gegen Überlastung zu schützen.

Die Steuerung des Haltearms kann mittels des Umlenkglieds auf einfache Weise dadurch vollzogen werden, daß die Betätigungsvorrichtung lediglich einen linearen Hub ausführt, und das Umlenkglied diese Bewegung umlenkt, sobald der Rahmen an einem Anschlag zur Anlage kommt. Demnach verstellt die Betätigungsvorrichtung in einem ersten Hubbereich den Rahmen und somit die Messer aus dem Zufuhrkanal, während sie in einem daran anschließenden Hubbereich das Umlenkglied bewegt.

Die Messer sind leicht und schnell von dem Rahmen zu trennen, wenn sie beidenends mit einer einseitig offenen Öffnung über Bolzen, eine Achse oder eine Rolle des Haltearms geschoben und von diesen abgenommen werden können.

Wenn der Haltearm mittels einer Zugfeder zu der Achse gezogen wird, erfährt das Messer in dem Rahmen einen festen Halt, der jedoch beim Auftreffen eines Gegenstands auf das Messer aus Sicherheitsgründen aufgehoben werden kann.

Der Haltearm kann einfach von dem Messer getrennt werden, wenn er in der Art einer Wippe andererseits von der Betätigungsvorrichtung beaufschlagbar ist.

In der Zeichnung ist ein nachfolgend näher beschriebenes Ausführungsbeispiel der Erfindung dargestellt. Es zeigt:
- Fig. 1: ein Schneidwerk in Seitenansicht mit Messern in einer Betriebsstellung,
- Fig. 2: das Schneidwerk mit den Messern in einer Außerbetriebsstellung
- Fig. 3: das Schneidwerk mit den Messern in der Außerbetriebsstellung und bereit zum Entnehmen,
- Fig. 4: ein Messer in Seitenansicht und
- Fig. 5: einen die Messer haltenden Rahmen in Seitenansicht.

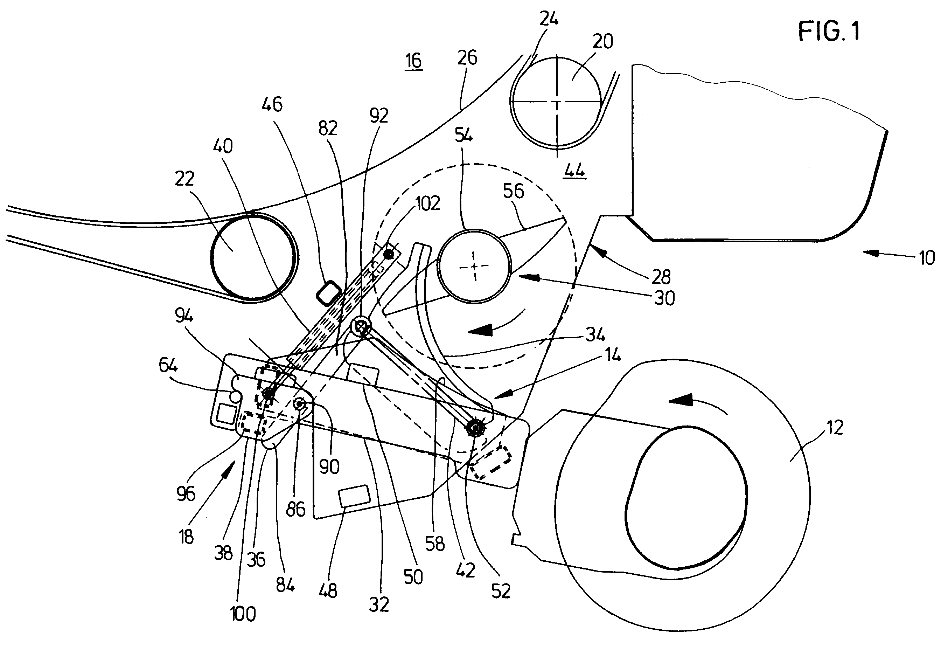

In Figur 1 ist ausschnittsweise eine Landmaschine 10 mit einer Aufnahmevorrichtung 12, einem Zufuhrkanal 14, einem Ballenpreßraum 16 und einem Schneidwerk 18 gezeigt.

Die Landmaschine 10 ist in diesem Fall als eine Rundballenpresse ausgeführt, die dazu dient, auf dem Boden abgelegtes Erntegut wie Stroh, Heu, Anwelksilage oder anderes Futtergut aufzunehmen und zu pressen. Während trockene Güter wie insbesondere Heu ohne weitere Behandlung in den Ballenpreßraum 16 gefördert werden, wird als Anwelksilage aufgenommenes Gut vor dem Eintritt in den Ballenpreßraum 16 mittels des Schneidwerks 18 zerkleinert. Die Landmaschine 10 könnte ebenfalls als ein Ladewagen oder eine Rechteckballen- oder eine Brikettierpresse ausgebildet sein.

Die Aufnahmevorrichtung 12 ist als eine sogenannte Pick-Up herkömmlicher Bauart ausgebildet, die auf dem Boden liegendes Gut aufnimmt und es dem Zufuhrkanal 14 bzw. dem Schneidwerk 18 aufgibt.

Der Zufuhrkanal 14 stellt eine Verbindung zwischen der Aufnahmevorrichtung 12 und dem Ballenpreßraum 16 her und kann teilweise von dem Schneidwerk 18 durchdrungen werden.

Der Ballenpreßraum 16 ist nur in seinem unteren Abschnitt gezeigt, wo er von einer vorderen Walze 20 und einer rückwärtigen Walze 22 sowie über diese geschlungene Riemen 24 begrenzt wird. In dem Ballenpreßraum 16 befindet sich ein Rundballen 26, der nahezu seine maximale Größe erreicht hat.

Das Schneidwerk 18 enthält ein Gestell 28, einen Rotationsförderer 30, einen Rahmen 32, Messer 34, Haltearme 36, ein Umlenkglied 38, eine Betätigungsvorrichtung 40 und eine Feder 42.

Das Schneidwerk 18 ist vorzugsweise derart mit seinem Gestell 28 ausgebildet, daß es als eine geschlossene Einheit gegebenenfalls mit der Aufnahmevorrichtung 12 an die Landmaschine 10 angebaut oder von dieser demontiert werden kann und ist zwischen der Aufnahmevorrichtung 12 und dem Ballenpreßraum 16 angeordnet, so daß aufgenommenes Gut auf dem Weg zum Ballenpreßraum 16 erfaßt und zerkleinert werden kann.

Das Gestell 28 besteht im wesentlichen aus zwei Seitenwänden 44, zwischen denen sich eine Strebe 46, ein vorzugsweise ebenfalls als Strebe ausgebildeter unterer Anschlag 48, ein oberer Anschlag 50 und eine Achse 52 erstrecken.

Der Rotationsförderer 30 setzt sich aus einem Rohr 54 und darauf aufgesetzten Mitnehmern 56 zusammen, zwischen denen Abstände gebildet sind und erstreckt sich zwischen beiden Seitenwänden 44, in denen er drehbar gelagert ist. Der Rotationsförderer 30 wird in der angedeuteten Richtung in Drehung versetzt und zieht das Erntegut über die gesamte Breite des Zufuhrkanals 14 zu dem Ballenpreßraum 16. die zwischen den Mitnehmern 56 vorhandenen Freiräume sind Teil des Zufuhrkanals 14.

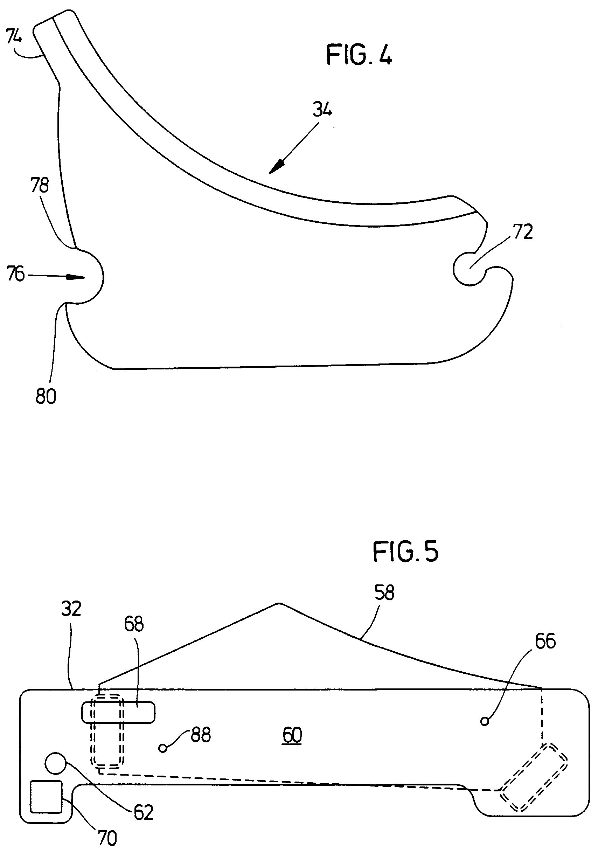

Der Rahmen 32 besteht aus einem rechteckförmigen Schweißzusammenbau, auf dessen Oberseite Führungsflächen 58 angebracht sind, zwischen denen die Messer 34 bewegt werden können. In zwei Seitenwangen 60 (sh. Figur 5) sind jeweils eine Arretierbohrung 62 für einen Sicherungsstift 64 und eine Öffnung 66 für die Achse 52 vorgesehen. Darüber hinaus sind auf die Außenseiten der Seitenwangen 60 unter- und oberhalb der Arretierbohrung 62 und jeweils in deren Nähe jeweils ein oberer und ein unterer Anschlagbock 68 und 70 aufgesetzt. Der Rahmen 32 wird mittels der durch die Öffnungen 66 geführten und in den Seitenwänden 44 gelagerten Achse 52 vertikal schwenkbar in das Gestell 28 eingehängt und ist zwischen dem oberen und dem unteren Anschlag 50 und 48 beweglich.

Die Messer 34 weisen ungefähr die Form eines rechtwinkligen Dreiecks auf, dessen Hypothenuse in einer Kurvenbahn mit konstantem Radius verläuft und eine Schneide bildet, die in den Zufuhrkanal 14 eingeführt werden kann. In einem auch in Figur 4 unteren und an die Hypothenuse angrenzenden Eckbereich enthält das Messer 34 eine Nut 72 von teilrundem Querschnitt, die sich nach außen öffnet und geeignet ist, ein Aufsetzen des Messers 34 auf die Achse 52 zu ermöglichen. In dem anderen an die Hypothenuse angrenzenden Eckbereich ist eine Anlagefläche 74 vorgesehen, mittels der die Messer 34 in der Außerbetriebsstellung auf die Strebe 46 aufgelegt werden können. In dem der Hypothenuse gegenüberliegenden Eckbereich ist eine Ausnehmung 76 vorgesehen, die in diesem Ausführungsbeispiel einen teilweise offenen, runden Querschitt aufweist und von einer oberen und einer unteren Kante 78 und 80 abgeschlossen wird. Die Anordnung und Ausbildung der Ausnehmung 76 ist so getroffen, daß die obere Kante 68 hinter dem Mittelpunkt der Ausnehmung 76 zurückbleibt, während die untere Kante 80 jenseits von dieser verläuft, so daß sich zudem eine kleine Nase bildet. Die untere Kante 80 ist die dem Rahmen 32 zugelegene. Im übrigen sind die Messer 34 scheibenartig geformt und erstrecken sich im Betriebszustand zwischen und parallel zu den Mitnehmern 56.

Die Haltearme 36 sind als zweiarmige Hebel mit einem langen, oberen und einem kurzen, unteren Schenkel 82 und 84 ausgebildet, zwischen denen sich eine Lagerbohrung 86 befindet. Die Lagerbohrung 86 wird von einer durch Bohrungen 88 in den Seitenwangen 60 des Rahmens 32 geführten Lagerachse 90 durchdrungen und führt zu einer vertikalen Schwenkbarkeit der Haltearme 36 gegenüber dem Rahmen 32. An dem oberen und der Ausnehmung 76 zugelegenen Endbereich des oberen Schenkels 82 ist auf den Haltearm 36 eine Rolle 92 drehbeweglich aufgesetzt, die in die Ausnehmung 76 paßt. Hierzu kann ein nicht näher gezeigter Zapfen, Stift oder dergleichen vorgesehen werden.

Das Umlenkglied 38 enthält zwei nahezu trapezförmige Platten 94, zwischen denen sich eine über den gesamten Rahmen 32 erstreckende Strebe 96 befindet. Die Platten 94 liegen an der Außenseite der Seitenwangen 60 an und sind um die Lagerachse 90 vertikal schwenkbar. An den Platten 94 sind jeweils eine Nase 98 und ein Zapfen 100 vorgesehen, wobei sich die Nase 98 an dem der Lagerachse 90 gegenüberliegenden Endbereich befindet und so ausgebildet ist, daß sie an dem Sicherungsstift 64 und dem unteren Anschlagbock 70 zur Anlage bringbar ist. Die Strebe 96 liegt in einem Freiraum zwischen den Unterkanten der Seitenwangen 60 und dem Endbereich des unteren Schenkels 84.

Die Betätigungsvorrichtung 40 ist in diesem Ausführungsbeispiel als doppelseitig beaufschlagbarer Hydraulikmotor ausgebildet - ein zu dessen Verstellung erforderlicher Hydraulikkreislauf ist herkömmlich ausgebildet und der Einfachheit halber nicht dargestellt. Mit ihrem oberen, zylinderseitigen Endbereich greift die Betätigungsvorrichtung 40 an dem Gestell 28 über einen Zapfen 102 und in ihrem unteren, kolbenstangenseitigen Endbereich an dem Zapfen 100 ebenfalls schwenkbar an.

Die Feder 42 ist als mechanische Zugfeder ausgebildet, die einerseits an der Achse 52 und andererseits im Bereich der Rolle 92 an dem Haltearm 36 befestigt ist und somit den Haltearm 36 zu der Achse 52 hin zieht. Anstatt einer mechanischen Zugfeder könnte auch eine Gasfeder, ein Gummizug oder dergleichen, oder in einer entsprechend geänderten Anordnung eine Torsionsfeder, eine Druckfeder oder dergleichen vorgesehen werden.

Nach alledem ergibt sich folgender Aufbau und folgende Funktion des Schneidwerks 18.

Der Rahmen 32 wird mittels der Achse 52 in dem Gestell 28 schwenkbar festgelegt, und die Haltearme 36 sowie das Umlenkglied 38 werden mittels der Lagerachse 90 mit dem Rahmen 32 verbunden. Anschließend werden die Messer 34 mit ihrer Nut 72 über die Achse 52 geschoben und mittels der Haltearme 36 gesichert, indem letztere mit der auf sie aufgesetzten Rolle 92 in die Ausnehmung 76 eingefügt werden. Daraufhin werden die Federn 42 an den Haltearmen 36 und der Achse 52 befestigt. Schließlich wird die Betätigungsvorrichtung 40 in ausgefahrenem Zustand montiert, eingefahren und das Umlenkglied 38 mittels des Sicherungsstifts 64 gegenüber dem Rahmen 32 festgelegt. Der Rahmen 32 liegt nunmehr an dem oberen Anschlag 50 an.

Der soweit beschriebene Aufbau und Zustand ist in Figur 1 dargestellt und entspricht der Betriebsstellung des Schneidwerks 18, in der die Messer 34 in den Zufuhrkanal 14 ragen und diesen passierendes Gut zerkleinern. In dieser Betriebsstellung können die Messer 34 bei feststehendem Rahmen 32 in einem Überlastungszustand von dem Rotationsförderer 30 weggedrückt werden, wozu die Rollen 92 aus den Ausnehmungen 76 über die oberen Kanten 78 austreten und auf den Außenkanten abrollen. Die Spannung der Federn 72 und die Formgebung der Außenkanten der Messer 34 reichen aus, die Messer 34 wieder in ihre schneidende Stellung zurück zu schwenken, wie dies bekannt ist.

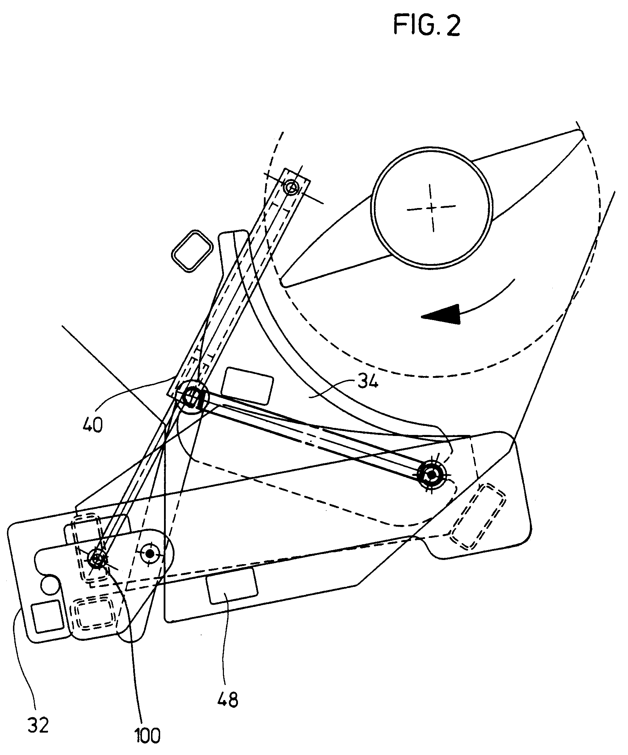

Bei der Darstellung nach Figur 2 ist die Betätigungsvorrichtung 40 ausgefahren, um die Messer 34 aus dem Zufuhrkanal 14 zu entfernen, d. h. außer Eingriff mit den Mitnehmern 56 zu bringen. In der ausgefahrenen Stellung, der Außerbetriebsstellung, liegt der Rahmen 32 an dem unteren Anschlag 48 an, und die Nase 98 liegt noch immer auf dem Sicherungsstift 64 an. Aufgrund der Formgebung der Ausnehmung 76 kann die Rolle 92 auch dann nicht über die untere Kante 80 aus der Ausnehmung 76 heraustreten, wenn die Messer 34 in dem Zufuhrkanal festgeklemmt sind und der Rahmen 32 mittels der Betätigungsvorrichtung 40 von dem Zufuhrkanal 14 weggeschwenkt wird.

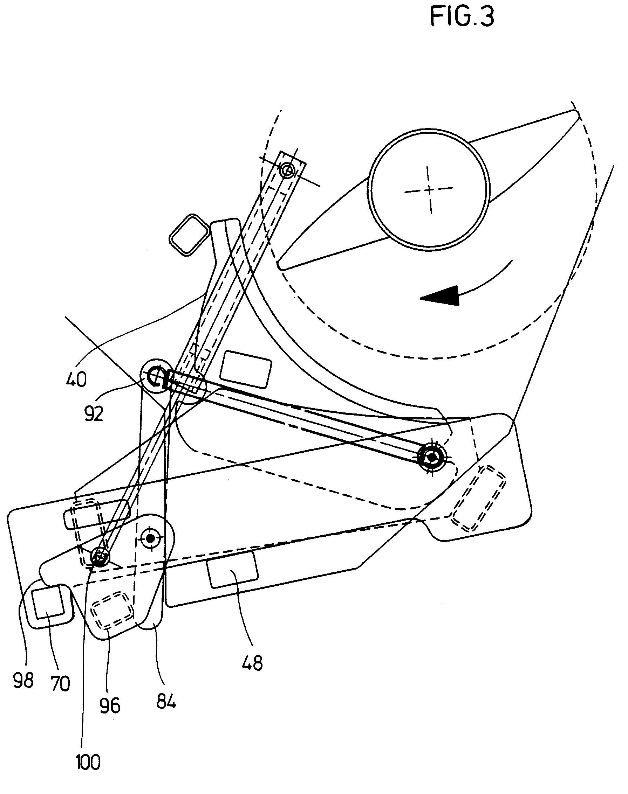

Figur 3 zeigt das Schneidwerk 18 ebenfalls in seiner Außerbetriebsstellung, wobei die Messer 34 aus dem Rahmen 32 entnommen werden können. Hierzu ist der Sicherungsstift 64 aus dem Rahmen 32 entnommen und die Betätigungsvorrichtung 40 soweit ausgefahren, daß der Rahmen 32 an dem unteren Anschlag 48 anliegt. Die Betätigungsvorrichtung 40 wird um einen weiteren Hubbereich ausgefahren und schwenkt nunmehr das Umlenkglied 38 um die Lagerachse 90, so daß die Strebe 96 an den unteren Schenkeln 84 zur Anlage kommt und die Haltearme 36 entgegen dem Uhrzeigerdrehsinn um die Lagerachse 96 verschwenkt. Der Schwenkvorgang der Haltearme 36 bewirkt, daß die Rollen 92 aus den Ausnehmungen 76 treten und die Messer 34 freigeben, so daß sie von der Achse 52 entnommen werden können.

Um die Messer 34 wieder mit dem Rahmen 32 in den Zufuhrkanal 14 zu bringen, wird die Betätigungsvorrichtung 40 eingefahren, bis der Rahmen 32 an dem oberen Anschlag 50 und die Platten 94 des Umlenkglieds 38 an dem oberen Anschlagbock 68 anschlagen.

Soweit in der Beschreibung auf Messer 34, Haltearme 36 und Federn 42 Bezug genommen wird, wird klargestellt, daß von jedem wenigstens ein Exemplar vorhanden sein muß.

## Patentansprüche

1. Schneidwerk (18) für eine Landmaschine (10), insbesondere für eine Rundballenpresse, mit wenigstens einem schwenkbaren Messer (34) und wenigstens einem Haltearm (36), wobei der Haltearm (36) in eine Ausnehmung (76) in dem Messer (34) einsetzbar ist, gekennzeichnet durch eine fremdkraftbetätigbare Betätigungsvorrichtung (40), die das Messer (34) mittels einer den Bewegungswiderstand übersteigenden form- und/oder reibschlüssigen Anlage des Haltearms (36) in der Ausnehmung (76) in eine Außerbetriebsstellung drängt und die in eine den Haltearm (36) von dem Messer (34) lösende Stellung bringbar ist.

2. Schneidwerk nach Anspruch 1, dadurch gekennzeichnet, daß das Messer (34) und der Haltearm (36) schwenkbar in einem Rahmen (32) gelagert sind.

3. Schneidwerk nach Anspruch 1 oder 2, dadurch gekennzeichnet, daß die Betätigungsvorrichtung (40) über ein Umlenkglied (38) an dem Rahmen (32) und dem Haltearm (36) angreift.

4. Schneidwerk nach Anspruch 3, dadurch gekennzeichnet, daß das Umlenkglied (38) mit dem Rahmen (32) verriegelbar ist.

5. Schneidwerk nach einem oder mehreren der vorherigen Ansprüche, dadurch gekennzeichnet, daß die Betätigungsvorrichtung (40) als Hydraulik-, Pneumatik- oder Elektromotor ausgebildet ist.

6. Schneidwerk nach einem oder mehreren der vorherigen Ansprüche, dadurch gekennzeichnet, daß die Ausnehmung (76) einerseits jenseits des Mittelpunkts einer ihren Querschnitt bestimmenden Fläche und andererseits eine diesseits des Mittelpunkts endende Kante (80, 78) aufweist.

7. Schneidwerk nach einem oder mehreren der vorherigen Ansprüche, dadurch gekennzeichnet, daß ein Anschlag (48) vorgesehen ist, an dem der Rahmen (32) anlegbar ist, sobald das Messer (34) aus einem Zufuhrschacht (14) entfernt ist.

8. Schneidwerk nach einem oder mehreren der vorherigen Ansprüche, dadurch gekennzeichnet, daß das Messer (34) einerseits mittels einer Nut (72) schwenkbar auf einer Achse (52) in dem Rahmen (32) und andererseits mittels einer in der Ausnehmung (76) aufgenommenen und auf dem Haltearm (36) lagernden Rolle (92) festgelegt ist.

9. Schneidwerk nach Anspruch 8, dadurch gekennzeichnet, daß zwischen dem Haltearm (36) und der Achse (52) eine Feder (42) vorgesehen ist.
